Europäisches Patentamt

European Patent Office

Office européen des brevets

(19)

(11) Numéro de publication : **0 474 575 A1**

## (12) DEMANDE DE BREVET EUROPEEN

(21) Numéro de dépôt : **91440069.2**

(51) Int. Cl.⁵ : **A01G 13/02**

(22) Date de dépôt : **03.09.91**

(30) Priorité : **03.09.90 FR 9010999**

(43) Date de publication de la demande :
**11.03.92 Bulletin 92/11**

(84) Etats contractants désignés :
**AT BE CH DE DK ES GB GR IT LI LU NL SE**

(71) Demandeur : **Besancon, Hervé**
**Montée de Granat**
**F-30560 Saint-Hilaire de Brethmas (FR)**

(72) Inventeur : **Besancon, Hervé**
**Montée de Granat**
**F-30560 Saint-Hilaire de Brethmas (FR)**

(74) Mandataire : **Arbousse-Bastide, Jean-Claude**
**Philippe**
**CABINET ARBOUSSE BASTIDE 20, rue de**
**Copenhague**
**F-67000 Strasbourg (FR)**

(54) **Machine pour ramasser, nettoyer et emballer les bâches plastiques agricoles.**

(57)    Machine pour ramasser, nettoyer et emballer les bâches plastiques agricoles.
    La bâche (2) est décollée par une barre transversale (20) puis déterrée par des versoirs symétriques (25). Une herse (3) munie de dents (30) l'amène par rotation actionnée hydrauliquement sur un rouleau (27). L'amorçage manuel du rouleau de bâche s'effectue autour d'un mandrin (41) posé sur des courroies souples (42) tendues entre deux rouleaux (43, 44) dans une trémie (4). Un des rouleaux (43, 44) est entraîné en rotation mécanique par les roues arrière (12, 13). Le nettoyage en surface de la bâche s'effectue par deux balais fixes (23) ainsi que deux brosses (261) et deux lames rigides (262) tournant à 600 T/mn. Un racleur en caoutchouc (28) ôte la terre en dessous de la bâche.

EP 0 474 575 A1

Fig.1

La présente invention concerne une machine destinée à ramasser, nettoyer et emballer les films plastique agricoles plus communément appelés bâches, étendus dans les champs et destinés soit au paillage, soit au tunnelage des cultures.

Ces bâches sont généralement déposées à l'aide d'une machine qui, simultanément au déroulement, enterre leurs bords pour éviter que le vent les emporte. De plus, elles sont, dans la plupart des cas, déposées sur des buttes dont la hauteur peut varier de 10 à 30 cm, suivant les cultures.

A l'heure actuelle, la récupération de ces bâches est faite manuellement. Cette méthode présente plusieurs inconvénients majeurs :

– c'est un travail long et fastidieux, (50 ares/homme/jour en moyenne), donc d'un prix de revient élevé.

– le travail est souvent mal fait et il reste une quantité relativement importante de bâche plastique enterrée, cause de pollution.

– les bâches ne sont pas nettoyées et il subsiste une grande quantité de terre et de végétaux qui y restent accrochés (plus de 70 % du poids), ce qui rend leur recyclage impossible. De plus, cette quantité de terre grève de façon importante le prix de revient des transports et pollue les rejets des usines de retraitement.

– les bâches ramassées "en vrac" sont très difficiles à stocker convenablement, donc impossibles à manutentionner aisément et à transporter. Cet inconvénient a pour conséquence directe que les bâches de récupération sont, dans la plupart des cas, entassées par les agriculteurs dans un coin du champ et brûlées sur place, ce qui occasionne pollution et nuisances.

Le but de la présente invention est d'apporter une réponse à tous les problèmes posés par la récupération des bâches usagées, en proposant une machine qui permet d'effectuer cette récupération à la vitesse de 3km/h, soit l'équivalent de 8 ha/homme/jour en moyenne.

La machine selon l'invention est un outil tracté pendant le travail. En déplacement, elle est portée par le tracteur. Au travail, elle repose sur 4 roues réglables en hauteur et largeur suivant le type de butte sur laquelle sont étendues les bâches. Son poids à vide, relativement faible (400 kg environ), lui permet d'être manutentionnable par des tracteurs de moyenne puissance (44 KW), et d'intervenir sur toutes sortes d'exploitations agricoles : petites et grandes surfaces, terrains pentus, grandes serres, etc...

Cette machine utilise les deux énergies disponibles sur les tracteurs, soit l'énergie mécanique, par l'intermédiaire de la prise de force, et l'énergie hydraulique, par l'intermédiaire de la pompe hydraulique.

Pour un fonctionnement normal de la machine, il est indispensable que les plants soient éliminés de la surface des bâches. Selon le type de culture, plusieurs solutions sont envisageables : récolte, arrachage manuel, broyage, etc... Dans le cas d'arrachage manuel ou de broyage, une certaine quantité de résidus demeure sur les bâches. Pour leur élimination, la machine est équipée à l'avant de deux brosses fixes réglables en largeur et hauteur, qui ont pour but de repousser sur les côtés des bâches la plus grosse partie de ces résidus.

L'ensemble de la machine est monté sur un châssis tubulaire, et elle permet d'accomplir les trois fonctions de récupération, nettoyage et emballage des bâches.

Les caractéristiques et avantages de la machine selon l'invention ressortiront clairement de la description qui suit et qui se réfère au dessin annexé, lequel en représente un mode de réalisation non limitatif.

Dans le dessin annexé :

– la figure 1 représente une vue de profil d'une machine selon l'invention.

– la figure 2 représente une vue de profil du châssis de ladite machine.

– la figure 3 représente une vue de dessus du châssis de la figure 2.

– la figure 4 représente une vue de face et partielle du même châssis.

– la figure 5 représente une vue de profil partielle de la machine.

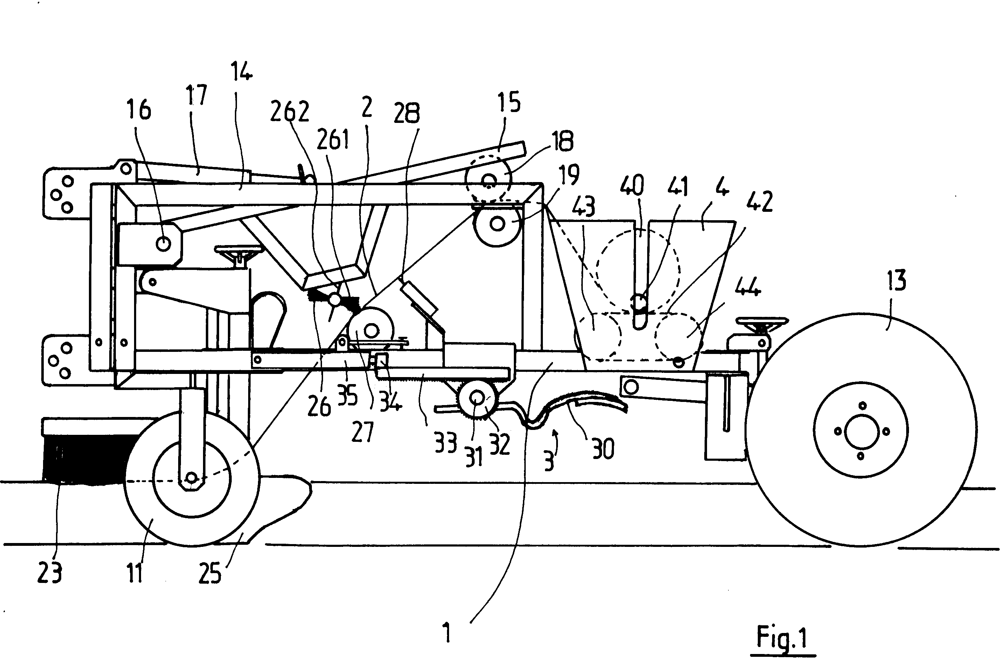

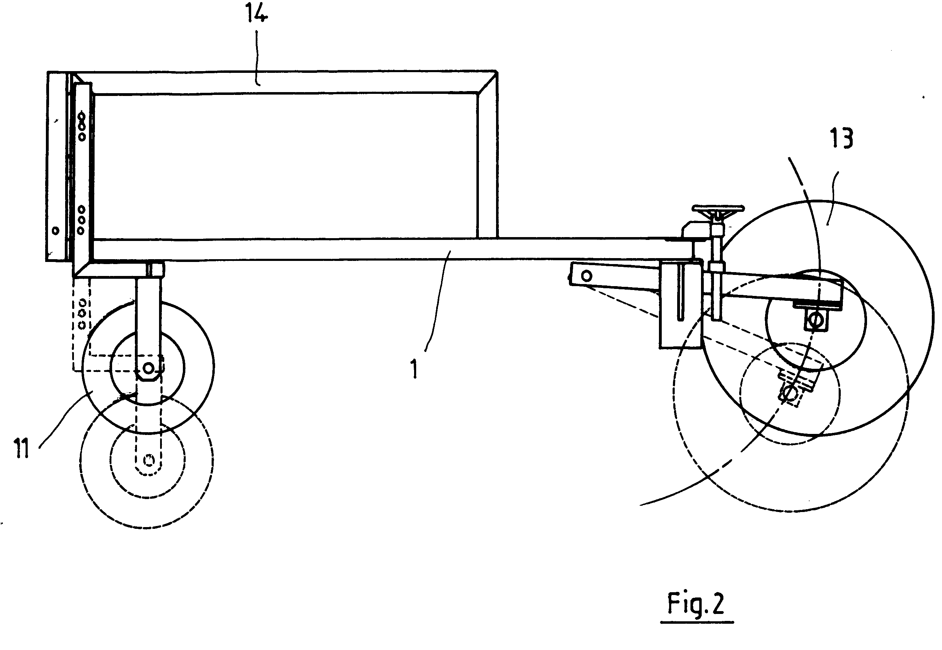

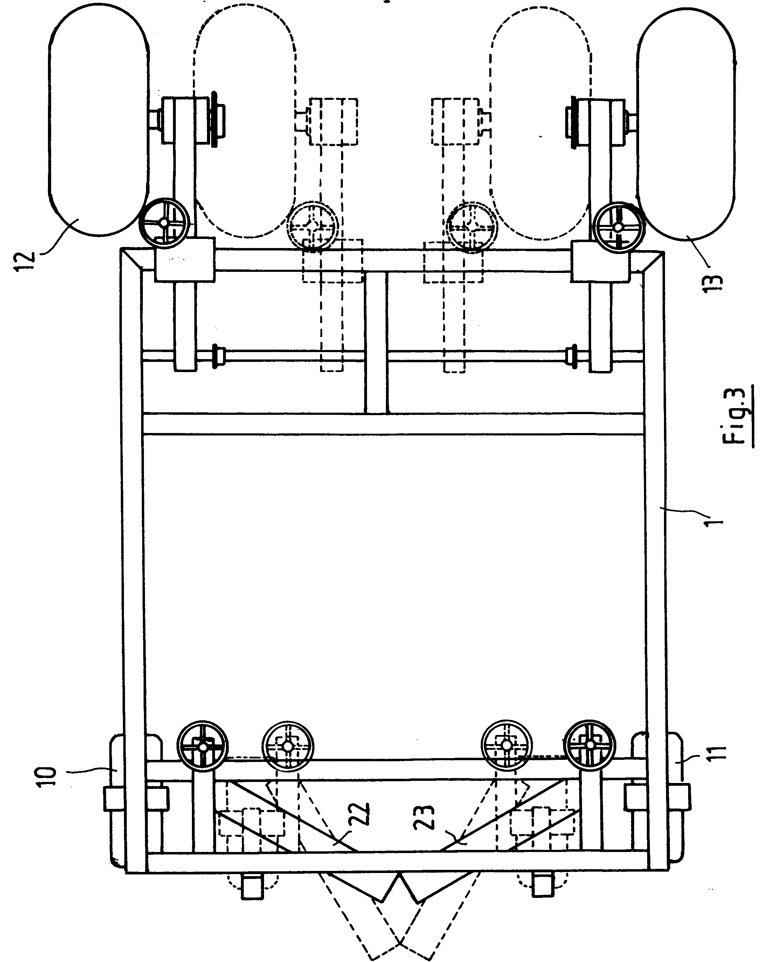

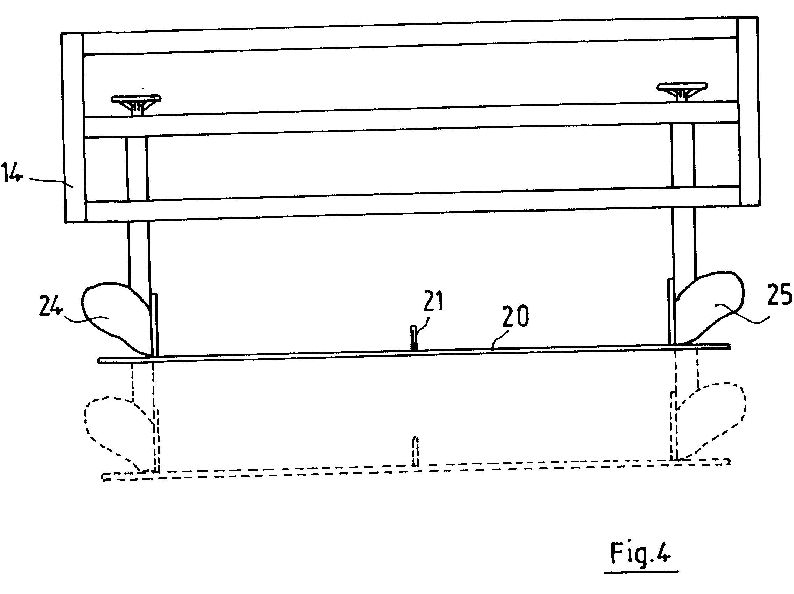

Si on se réfère aux figures 1, 2, 3 et 4 on peut voir que la machine selon l'invention comporte un châssis 1 constitué de l'assemblage en quadrilatère de barres à section carrée, ce châssis 1 reposant sur quatre roues, deux roues avant 10 et 11, et deux roues arrière 12 et 13.

Les roues 10, 11, 12 et 13 sont mobiles par rapport au châssis, en ce sens que l'on peut modifier d'une part leur écartement et d'autre part leur hauteur, cette mobilité étant réalisée par des moyens connus en soi, à savoir par coulissement horizontal sur une barre transversale du châssis pour régler l'écartement des roues, et par coulissement vertical pour le réglage de leur hauteur.

Le châssis 1 est surmonté d'une structure 14 supportant un châssis 15 articulé autour d'un axe horizontal 16 au moyen d'un vérin 17.

Le châssis articulé 15 est solidarisé, au voisinage de son extrémité libre et à sa partie inférieure, à un rouleau entraîneur 18 dont la surface est lisse mais permet une bonne adhérence avec la bâche, étant par exemple caoutchoutée à l'aide d'un produit élastique.

Lorsque le châssis articulé 15 est en position de travail, c'est-à-dire en position basse, le rouleau entraîneur 18 est en contact avec un rouleau entraîneur 19 solidaire de la structure 14, l'articulation du châssis 15 permettant de faire passer entre les deux rouleaux 18 et 19 la bâche plastique 2.

Les rouleaux entraîneurs 18 et 19 sont entraînés mécaniquement par la rotation des roues, la récupération de la bâche 2 étant liée à l'avancement de la machine.

A l'avant de la machine, entre les deux roues avant 10 et 11, s'étendent deux balais 22 et 23 solidaires du châssis 1, positonnés en avant d'une barre de décollement horizontale 20 munie en son centre d'un couteau vertical 21 permettant de sectionner en son milieu la bâche 2 en vue d'évacuer par la fente ainsi formée la terre qui pourrait y subsister, malgré le passage préalable des deux balais 22 et 23.

A la face interne de chacune des roues avant 10 et 11 est accolé, fixé sur la jambe verticale portant la roue, un versoir, respectivement 24 et 25, permettant de déterrer les bords de la bâche 2 et d'évacuer la terre vers l'extérieur.

Le châssis articulé 15 comporte égalaient, situé entre l'axe de pivotement 16 et le rouleau entraîneur 18, un ensemble de nettoyage 26, d'axe horizontal, en contact avec un rouleau 27 en libre rotation sur le châssis 1 et constitué de deux brosses souples 261 disposées à 180° et de deux lames rigides 262 également disposées à 180°, cet ensemble, entraîné par la prise de force du tracteur, tournant à une vitesse d'environ 600 tours/minute.

Les brosses, relativement étroites, ont pour but d'évacuer les résidus de terre ou végétaux collés sur la bâche, par le frottement des balais, mais aussi par le battage sur la bâche dû à la discontinuité de la brosse.

Les lames rigides, réglées en retrait des brosses, ont pour but d'arracher les végétaux (en particulier les souches des plants) pouvant rester coincés dans la bâche.

Les brosses étant susceptibles de s'user, le contact est maintenu par un réglage en hauteur du rouleau 27 monté sur un support articulé.

Lorsque la bâche 2 est décollée du sol par les deux versoirs 24 et 25, elle est introduite dans un premier temps entre la brosse 26 et le rouleau 27 puis dans un deuxième temps entre les deux rouleaux entraîneurs 18 et 19. Dans le cas où de la terre viendrait à rester collée sous la bâche 2, un racloir en caoutchouc 28 solidaire du châssis et positionné horizontalement entre le rouleau 27 et le rouleau entraîneur 19 permet de la décoller.

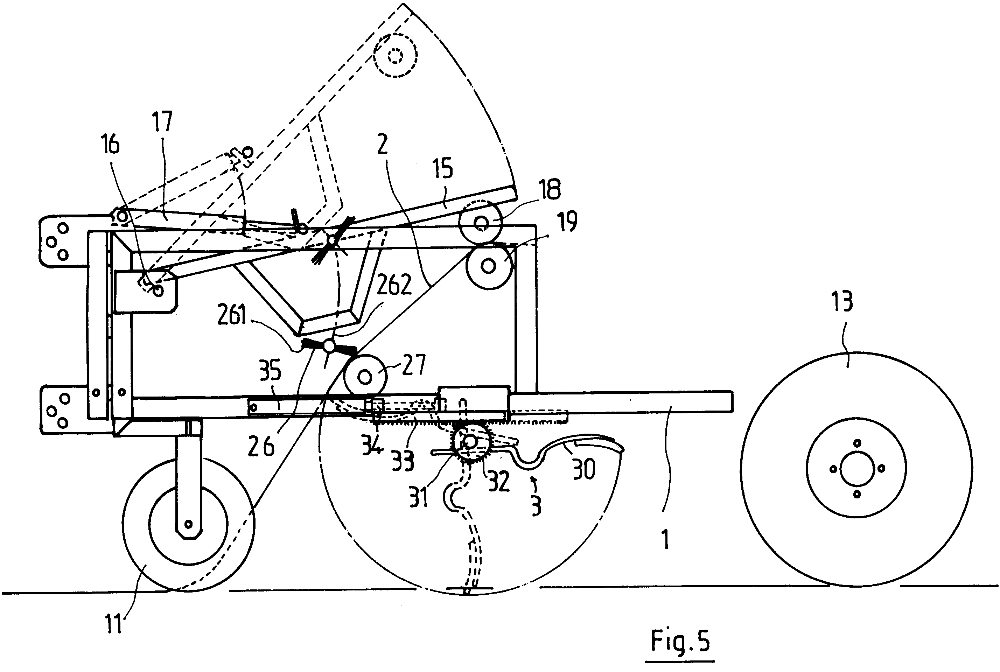

Si on se réfère également à la figure 5 on peut voir que l'amenée de l'extrémité de la bâche 2 entre le rouleau 27 et la brosse 26 est facilitée d'une part par le déplacement vers le haut du châssis articulé 15, qui a pour effet d'écarter l'ensemble de nettoyage 26 du rouleau 27 et d'écarter les deux rouleaux entraîneurs 12 et 19 ; et d'autre part par une herse 3 comportant une rangée de dents 30 et pivotant horizontalement autour d'un axe 31 solidaire du châssis.

L'axe 31 de la herse 3 comporte à l'une de ses extrémités un pignon denté 32 s'engrenant sur une crémaillère 33 solidaire de la tige 34 d'un vérin 35 solidaire du châssis 1.

Ainsi, lors du déploiement de la tige 34 du vérin 35, la crémaillère 33 entraîne le pignon 32 qui entraîne l'axe 31, et les dents 30 de la herse 3 décrivent un arc de cercle, en sorte que leurs extrémités raclent la bâche 2 et l'amènent sur le rouleau 27. Il suffit alors de ramener le châssis articulé 15 dans sa position basse pour que d'une part la brosse 26 applique la bâche 2 contre le rouleau 27 et d'autre part les rouleaux entraîneurs 18 et 19 emprisonnent la bâche 2.

La récupération de la bâche et son enroulement s'effectuent dans une trémie 4 solidarisée à la partie arrière du châssis 1, dont l'arête est revêtue de caoutchouc permettant de parfaire le nettoyage de la face inférieure de la bâche et dont les flancs latéraux comportent chacun une fente verticale 40. Dans ces fentes 40 est introduit transversalement un mandrin 41, sur lequel peut avoir été conditionnée la bâche neuve.

Dans le fond de la trémie 4 est disposé un dispositif d'entraînement comprenant des courroies 42 tendues sur deux rouleaux 43 et 44, et sur lesquelles repose le mandrin 41 auquel on fixe l'extrémité de la bâche 2. L'un des rouleaux 43, 44 est entraîné en rotation mécaniquement à partir des roues 12, 13 de la machine, et entraîne les courroies 42, qui entraînent à leur tour en rotation le mandrin 41 sur lequel s'enroule la bâche 2.

Pour assurer une bonne compacité du rouleau, il est nécessaire que la bâche soit bien tendue entre les rouleaux 18, 19 et le mandrin 41.

Le système d'entraînement permettant un patinage facile du rouleau sur les courroies, la vitesse d'enroulement sera sensiblement supérieure à la vitesse de récupération des bâches, ce qui assure une bonne tension et, par conséquent, la formation de rouleaux très compacts.

Ces rouleaux sont facilement évacués par le dégagement des fentes de la trémie, en soulevant le mandrin 41 qui sert de poignées.

Il convient de souligner qu'à aucun moment les rouleaux ne tirent sur la bâche, leur entraînement étant assuré par un système mécanique, lui-même entraîné par la rotation des roues arrière de la machine.

C'est ainsi l'avance de la machine qui détermine la vitesse de récupération, avec toutefois un léger avantage pour compenser un patinage éventuel.

Il va de soi que la portée de la présente invention ne saurait être limitée à la description qui précède d'un de ses modes de réalisation, susceptible de subir un certain nombre de modifications sans pour autant sortir du cadre de l'invention.

**Revendications**

1) Machine pour le ramassage des bâches plastiques agricoles, caractérisée en ce qu'elle comporte, sur un châssis (1) monté sur roues (10, 11, 12, 13) des versoirs (25), une barre transversale (20), des brosses fixes (23), des brosses et lames rotatives (26), un racleur (28), des rouleaux (27, 18, 19), des dents ramasseuses de bâches (30), une trémie (4).

2) Machine selon la revendication 1 caractérisée en ce que les quatre roues (10, 11, 12, 13) sont réglables en hauteur et en écartement.

3) Machine selon la revendication 1 caractérisée en ce que le décollement de la bâche du sol se fait à l'aide de la barre transversale (20) réglable en hauteur, largeur et inclinaison, et des versoirs (25) disposés bilatéralement.

4) Machine selon la revendication 1 caractérisée en ce que le ramassage de la bâche se fait à l'aide des dents (30) mues hydrauliquement par un système vérin-crémaillère-pignon (35, 33, 32).

5) Machine selon la revendication 1 caractérisée en ce que le nettoyage de la bâche se fait par deux brosses fixes (23) pour évacuer les végétaux, des brosses souples et des lames rigides (261, 262) pour enlever la terre collée sur la bâche et arracher les souches de plants qui peuvent s'y trouver et un racleur (28) pour enlever la terre collée sous la bâche.

6) Machine selon la revendication 1 caractérisée en ce que l'enroulement de la bâche se fait autour d'un mandrin (41) posé sur des courroies souples (42) tendues entre deux rouleaux (43, 44) disposés dans la trémie (4), un des rouleaux (43, 44) étant entraîné en rotation mécanique par les roues arrière (12, 13).

EP 0 474 575 A1

Fig.1

Fig.2

Fig.3

EP 0 474 575 A1

Fig.4

Fig.5

EP 0 474 575 A1

Office européen
des brevets

**RAPPORT DE RECHERCHE EUROPEENNE**

Numero de la demande

EP 91 44 0069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 562 382 (BUDZYN)<br>* page 3, alinéa 2 - page 5, dernier alinéa ; figures 1-3 * | 1,5,6 | A01G13/02 |
| A | US-A-4 796 711 (CHRYSLER)<br>* colonne 3, ligne 27 - colonne 7, ligne 41; figures 1-8 * | 1 | |
| A | US-A-3 687 392 (PARRY)<br>* colonne 2, ligne 24 - colonne 5, ligne 23; figures 1-4 * | 1 | |
| | | | **DOMAINES TECHNIQUES RECHERCHES (Int. Cl.5)**<br><br>A01G |

Le présent rapport a été établi pour toutes les revendications

| Lieu de la recherche | Date d'achèvement de la recherche | Examinateur |
|---|---|---|
| LA HAYE | 28 NOVEMBRE 1991 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)